## Europäisches Patentamt

## European Patent Office

## Office européen des brevets

(19)

(11) Numéro de publication: **0 018 253**
**B1**

(12) **FASCICULE DE BREVET EUROPEEN**

(45) Date de publication du fascicule du brevet:
16.03.83

(51) Int. Cl.³: **G 01 T 1/28**

(21) Numéro de dépôt: **80400418.2**

(22) Date de dépôt: **28.03.80**

(54) Dispositif de détection de particules.

(30) Priorité: **03.04.79 FR 7908327**

(43) Date de publication de la demande:
**29.10.80 Bulletin 80/22**

(45) Mention de la délivrance du brevet:
**16.03.83 Bulletin 83/11**

(84) Etats contractants désignés:
**DE GB NL**

(56) Documents cités:
**US-A-2 994 773**
**US-A-3 033 984**

**NUCLEAR INSTRUMENTS AND METHODS, vol. 95, no. 3, 1971, Amsterdam, NL, W. PARKES et al. "The use of cascaded channel plates as high gain electron multiplier", pages 487–491.**

(73) Titulaire: **COMMISSARIAT A L'ENERGIE ATOMIQUE Etablissement de Caractère Scientifique Technique et Industriel, B.P. 510, F-75752 Paris Cedex 15 (FR)**

(72) Inventeur: **Garin, Arlette, 2, Allée du Bassin, F-91190 Gif-sur-Yvette (FR)**
Inventeur: **Rouger, Michel, 56, Allée de la Pointe Genéte (Chevry), F-91190 Gif-sur-Yvette (FR)**
Inventeur: **Saudinos, Jean, 9, rue Auguste Comte, F-75006 Paris (FR)**

(74) Mandataire: **Mongrédien, André et al, c/o BREVATOME 25, rue de Ponthieu, F-75008 Paris (FR)**

Dispositif de détection de particules

L'invention concerne un dispositif de détection de particules permettant notamment de détecter des particules de grande énergie ne laissant que très peu d'ionisation.

Afin de remplacer les dispositifs de détection de particules existants qui sont trop complexes et dont la réponse est trop lente, notamment lorsqu'ils sont soumis à un bombardement de particules particulièrement intense comme le permettent les nouvelles générations d'accélérateurs de particules, on a proposé d'utiliser le phénomène d'émission d'électrons secondaires par un matériau mince et poreux traversé par un faisceau de particules. A cet effet, on a disposé dans le faisceau de particules une cible constituée par une plaque support d'aluminium recouverte par une couche mince et poreuse d'un matériau tel que le chlorure de potassium ou l'iodure de césium présentant des caractéristiques d'émission d'électrons secondaires particulièrement favorables vis-à-vis de la nature des particules à détecter ou à discriminer dans le cas d'un faisceau hétérogène. Une cible de ce type présente le double avantage de ne pas perturber le faisceau de particules incidentes en raison de la faible densité du matériau utilisé et de fournir une réponse rapide par suite de l'absence d'inertie des électrons secondaires émis. Cependant, en raison de la faible densité de matériau émetteur d'électrons secondaires, le nombre des électrons émis lorsque les particules incidentes sont à leur minimum d'ionisation est très faible malgré le bon rendement de ce type de cible. Il est donc indispensable d'amplifier le signal délivré par la cible, c'est-à-dire de multiplier autant que possible le nombre des électrons secondaires. Pratiquement, les études faites jusqu'à ce jour sur ce type de détecteur ont donc conduit à utiliser des multiplicateurs d'électrons classiques comprenant par exemple plusieurs galettes de micro-canaux disposées en cascade entre la cible et une anode et polarisées de façon appropriée afin d'accélérer les électrons secondaires émis entre chacune des galettes. Cependant, un tel dispositif d'amplification n'est pas satisfaisant, car il diminue sensiblement l'efficacité du dispositif et le taux d'amplification obtenu n'est pas strictement proportionnel au nombre d'électrons émis par la cible, étant donné que les signaux sortant des multiplicateurs d'électrons sont souvent à saturation.

On connaît aussi du brevet US-A-3 033 984, un appareil permettant d'accroître l'énergie des rayons X de faible énergie pour en permettre la détection. Cet appareil comprend une cible émettant des électrons secondaires, une plaque amplificatrice et une plaque émettant des rayons X de plus forte énergie, qui sont détectés par un compteur de type classique. Toutefois, il n'existe pas de proportionnalité entre les électrons émis par la cible et les rayons X de forte énergie.

La présente invention a pour objet la réalisation d'un dispositif de détection de particules par émission d'électrons secondaires permettant de remédier aux inconvénients qui viennent d'être mentionnés tout en répondant aux exigences particulières à la détection de particules données dans des faisceaux de forte intensité homogènes ou hétérogènes, lorsque ces particules sont au minimum d'ionisation.

Dans ce but, il est proposé un dispositif de détection de particules comprenant une enveloppe sous vide dans laquelle sont disposés une cible mince et plane réalisée en un matériau susceptible d'émettre des électrons secondaires lorsqu'une particule donnée d'énergie suffisante vient frapper la cible, et un dispositif multiplicateur d'électrons comprenant plusieurs plaques amplificatrices minces et planes réalisées en un matériau susceptible d'émettre des électrons d'énergie suffisante, les plaques étant parallèles à la cible et espacées les unes des autres, les électrons secondaires émis par la cible et par chacune des plaques étant accélérés par une différence de potentiel appropriée établie entre la cible et la plaque la plus proche et entre les différentes plaques, caractérisé en ce que les matériaux constituant la cible et les plaques amplificatrices sont poreux et en ce qu'un écran est associé à chacune des plaques et porté à la même tension que celle-ci pour empêcher le retour vers la cible des ions positifs émis en même temps que les électrons secondaires.

Dans un tel dispositif, la cible ainsi que les plaques constituant le dispositif multiplicateur d'électrons sont de préférence réalisées sensiblement de la même manière à partir d'une plaque mince d'un matériau poreux susceptible d'émettre des électrons secondaires lorsqu'il est frappé par une particule incidente. L'efficacité de la cible est donc préservée par l'efficacité de chacune des plaques amplificatrices et les électrons émis par la cible donnent lieu à la création de nouveaux électrons secondaires dans la première plaque amplificatrice et ainsi de suite, de telle sorte que la multiplication des électrons s'effectue en cascade et permet d'obtenir un taux d'amplification sensiblement proportionnel au nombre d'électrons créés par la cible en raison du caractère poreux de la cible et des plaques qui n'arrêtent pratiquement pas les électrons émis. De plus, le dispositif selon l'invention permet de réaliser des détecteurs de particules de grande surface (plusieurs centaines de cm²), ce qui n'était pas possible avec les dispositifs antérieurs, dans lesquels la surface des multiplicateurs était généralement limitée à quelques cm².

Conformément à une autre caractéristique d'une forme d'exécution avantageuse de l'invention, la densité du matériau constituant la cible et la densité du matériau constituant les plaques amplificatrices sont comprises entre 1 et 10% de la densité normale de ces matériaux.

De préférence, la cible et chacune des plaques comprennent alors des supports métalliques sur matière plastique au moyen desquels la tension appropriée leur est appliquée et les écrans sont également métalliques. Les écrans et les supports peuvent être réalisés par exemple, en aluminium.

Conformément à encore une autre caractéristique d'une forme d'exécution de l'invention, le matériau constituant la cible est choisi parmi les halogénures de matériaux alcalins tels que les matériaux suivants: chlorure de potassium, oxyde de magnésium, cryolithe, iodure de césium et fluorure de lithium (notamment pour la détection des neutrons). De préférence, la matériau constituant les plaques amplificatrices est de l'iodure de césium.

Selon encore une autre caractéristique d'une forme d'exécution de l'invention, la cible et les plaques amplificatrices sont planes et disposées à l'intérieur d'une enceinte sous vide.

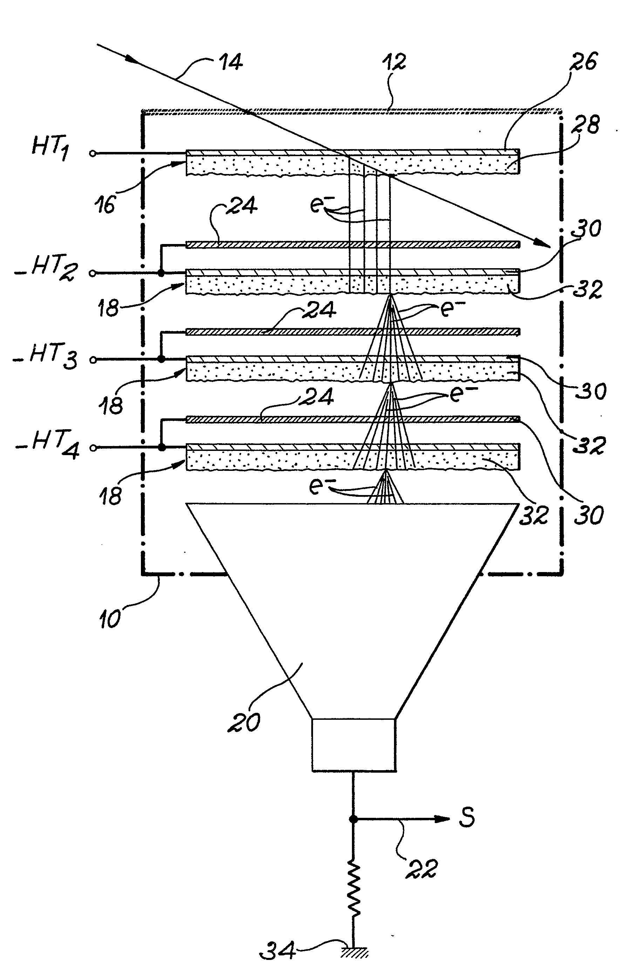

On décrira maintenant, à titre d'exemple non limitatif, un mode de réalisation particulier de l'invention en se référant au dessin annexé dans lequel la figure unique représente un dispositif de détection de particules réalisé conformément aux enseignements de la présente invention.

Le dispositif de détection de particules représenté sur la figure comprend une enceinte 10 dans laquelle est établi un vide poussé (environ 10⁻⁶). L'enceinte 10 comprend une fenêtre 12 susceptible de laisser passer un faisceau de particules incidentes 14, de telle sorte que ce dernier vienne frapper une cible 16 disposée derrière la fenêtre 12 sous une incidence convenable déterminée. Derrière la cible 16 sont disposées plusieurs plaques amplificatrices 18 parallèles entre elles et à la cible 16 et régulièrement espacées de façon à définir un multiplicateur d'électrons. Le nombre des plaques 18 est déterminé en fonction de l'amplification souhaitée.

Une anode 20 est disposée derrière la dernière plaque amplificatrice 18. L'anode 20 est susceptible de transmettre un signal de sortie S par l'intermédiaire d'une ligne 22 à un système de mesure ou d'enregistrement (non représenté).

De plus, un écran 24 est disposé au-dessus de chacune des plaques amplificatrices 18 en considérant la figure afin d'empêcher, comme on le verra par la suite, le retour vers la cible 16 des ions positifs émis en même temps que les électrons secondaires par chacune des plaques amplificatrices 18.

La cible 16 comprend un support en aluminium sur matière plastique 26 sur la face inférieure duquel est déposée une couche mince et poreuse 28 formée de grains de petites dimensions d'un matériau susceptible d'émettre des électrons secondaires, lorsqu'il est frappé par des particules incidentes 14 déterminées. De préférence, ce matériau est choisi parmi les halogénures de métaux alcalins tels que le chlorure de potassium, l'oxyde de magnésium, la cryolithe, l'iodure de césium et le fluorure de lithium. Le choix du matériau dépend de la nature des particules à détecter. Ainsi, pour la détection des neutrons, on utilisera de préférence du fluorure de lithium. De même, la masse de la couche poreuse est déterminée à l'avance pour que l'efficacité du rendement électronique soit maximale. En outre, la porosité de ce matériau est telle que la masse de la couche poreuse mise dans le faisceau de particules, inférieure à un milligramme/cm², ne perturbe pas ce faisceau. De préférence, la densité de la couche poreuse est comprise entre 1 et 10% de sa densité normale.

Toutes les plaques 18 sont identiques et leur structure est du même type que celle de la cible 16. Ainsi chaque plaque 18 comprend un support en aluminium sur matière plastique 30, sur la face inférieure duquel est déposée une couche mince et poreuse 32 d'un matériau susceptible d'émettre des électrons secondaires lorsqu'il est frappé par des électrons incidents en provenance de la cible 16 ou de la plaque amplificatrice 18 précédente. Etant donné que les particules 14 heurtant la cible 16 ne sont pas nécessairement des électrons, on comprendra que le matériau émetteur 28 de la cible doit être déterminé en fonction des particules à détecter, alors que la matériau émetteur 32 des plaques 18 peut être choisi indépendamment de la nature du faisceau incident. Ainsi, les couches minces et poreuses 32 sont généralement réalisées en iodure de césium, matériau particulièrement adapté lorsque les particules incidentes sont constituées par des électrons. Par ailleurs, les caractéristiques concernant la masse et la porosité de ce matériau doivent répondre aux mêmes exigences que pour la cible 16 et elles sont donc déterminées de la même manière.

Comme le montre la figure, afin d'accélérer les électrons secondaires émis par les matériaux émetteurs 28 et 32 de la cible 16 et des plaques amplificatrices 18, l'anode 20 est connectée à la terre en 34 et le support 30 de chacune des plaques 18 ainsi que le support 26 de la cible 16 sont soumis à des tensions négatives $-HT_4$, $-HT_3$, $-HT_2$ et $-HT_1$ de plus en plus élevées en s'éloignant de l'anode 20. En outre, chacun des écrans 24 est soumis à la même tension négative que la plaque amplificatrice 18 à laquelle il est associé.

Le dispositif de détection de particules qui vient d'être décrit en se référant à la figure unique fonctionne de la façon suivante:

Lorsqu'un faisceau de particules incidentes et notamment un faisceau de forte intensité, par exemple d'environ 10¹² particules, vient frapper la cible 16 au travers de la fenêtre 12 ménagée dans l'enceinte sous vide 10, des électrons secondaires sont émis de façon connue par la couche mince et poreuse 16 comme l'illustre schématiquement la figure. Lorsque les particules à détecter sont des particules de moyenne ou de faible énergie à leur minimum d'ionisation, la vitesse de ces électrons et leur nombre sont relativement faibles et il est nécessaire de les accélérer avant de les multiplier. Les électrons secondaires émis par la cible 16 sont accélérés par la différence de potentiel existant entre cette dernière et la première plaque amplificatrice 18, de telle sorte qu'ils viennent heurter celle-ci avec une énergie suffisante pour donner lieu à une nouvelle émission d'électrons secondaires dans la couche mince poreuse 32 de cette première plaque. Les électrons secondaires venant heurter la plaque 18 se trouvent ainsi multipliés par cette dernière comme l'illustre schématiquement la figure. Le même phénomène d'émission secondaire se reproduit entre les différentes plaques amplificatrices 18 ainsi qu'entre la dernière de ces plaques et l'anode 20, les électrons secondaires émis par chacune des couches 32 étant accélérés par la différence de potentiel existant entre ces plaques, puis multipliées par celles-ci. Le nombre des électrons secondaires venant heurter l'anode 20 est donc suffisant pour permettre l'émission d'un signal S à la sortie 22 de l'anode 20, même si l'énergie des particules incidentes du faisceau 14 est relativement faible et même si le nombre des particules à détecter est peu élevé.

Simultanément à l'émission d'électrons secondaires qui se produit dans chacune des couches minces et poreuses 28 et 32 constituant respectivement la cible 16 et les plaques amplificatrices 18, des ions positifs sont également émis par ces couches. En raison des différences de potentiel établies entre ces différentes couches, ces ions positifs émis par les plaques amplificatrices 18 ont tendance à remonter vers la cible 16. Cependant, ce retour vers la cible des ions positifs émis par les plaques amplificatrices est empêché par les écrans 24, portés au même potentiel que les plaques 18 auxquelles ils sont associés. Le fonctionnement du dispositif n'est donc pas perturbé par l'émission d'ions positifs simultanément à l'émission d'électrons secondaires dans les plaques 18. Bien entendu, les écrans 24 laissent passer les électrons secondaires émis par la cible 16 ou par la plaque 18 surplombant ces écrans.

En raison de l'absence d'inertie de l'émission secondaire dans la cible 16, ainsi que dans chacune des plaques amplificatrices 18, la réponse du dispositif selon l'invention est particulièrement rapide, égale ou inférieure à la picoseconde, ce qui permet d'obtenir une efficacité de rendement autorisant l'utilisation d'un tel détecteur pour la détection de particules dans un faisceau particulièrement intense. En outre, en raison de la nature poreuse des différentes couches constituant le dispositif, celui-ci ne perturbe pas le faisceau de particules. Ainsi, la nature mince et poreuse des différentes couches permet d'obtenir une efficacité de détection proche de 100% (correspondant à la détection d'une seule particule). En effet, la réalisation de substrats très minces sans support, inférieurs à 70 µg/cm², permet à des électrons de très faible énergie sortant de la cible de traverser la première plaque avant de se multiplier.

La fabrication des couches minces et poreuses s'effectue dans des enceintes à vide très propres du point de vue des impuretés, par évaporation par effet Joule sous pression d'argon. De plus, le produit à évaporer subit auparavant un traitement de dégazage éliminant l'eau et l'oxygène. Dans une variante non représentée, on peut disposer de plusieurs cibles interchangeables comprenant des matériaux émetteurs différents, la cible étant choisie en fonction de la particule à détecter. Enfin, en raison de la structure plane des différentes couches du détecteur et du parallélisme de ces couches, il est possible de réaliser des détecteurs de grande surface (par exemple de l'ordre de 625 cm²), ce qui permet d'obtenir des détecteurs dont l'efficacité est sensiblement supérieure à celle des détecteurs connus actuellement comprenant des multiplicateurs dont la surface est généralement limitée à quelques cm².

Dans un exemple d'application (non représenté) non limitatif d'un détecteur selon l'invention, celui-ci est utilisé pour assurer l'amplification des images dans un microscope électronique. Dans un tel microscope, l'objet observé est bombardé par un faisceau d'électrons, et l'image de la surface de l'objet est fonction du nombre d'électrons secondaires émis par cette surface et traversant une lentille de focalisation avant d'être détectés par un scintillateur. En effet, un dispositif de détection selon l'invention peut être disposé entre la lentille de focalisation et le scintillateur afin d'amplifier le signal détecté par ce dernier, notamment dans les cas où l'émission secondaire est trop faible pour permettre de voir avec précision la surface de l'objet. Dans une application de ce type, le matériau émetteur de la cible et des plaques amplificatrices peut être le même, par exemple de l'iodure de césium, l'épaisseur de chaque couche mince correspondant à environ 40 µg/cm², la distance entre plaques étant d'environ 1,5 mm et la haute tension de 3 KV.

## Revendications

1. Dispositif de détection de particules comprenant une enceinte (10) sous vide dans laquelle sont disposés une cible (16) mince et plane réalisée en un matériau susceptible d'émettre des électrons secondaires lorsqu'une particule donnée d'énergie suffisante vient frapper la cible, et un dispositif multiplicateur d'électrons, comprenant plusieurs plaques amplificatrices (18) minces et planes réalisées en un matériau susceptible d'émettre des électrons secondaires lorsqu'il est frappé par des électrons d'énergie suffisante, les plaques étant parallèles à la cible et espacées les unes des autres, les électrons secondaires émis par la cible et par chacune des plaques étant accélérés par une différence de potentiel appropriée établie entre la cible et la plaque la plus proche et entre les différentes plaques, caractérisé en ce que les matériaux constituant la cible (16) et les plaques amplificatrices (18) sont poreux et en ce qu'un écran (24) est associé à chacune des plaques (18) et porté à la même tension que celle-ci pour empêcher le retour vers la cible (16) des ions positifs émis en même temps que les électrons secondaires.

2. Dispositif selon la revendication 1, caractérisé en ce que les densités du matériau constituant la cible (16) et du matériau constituant les plaques amplificatrices (18) sont comprises entre 1 et 10% de la densité normale de ces matériaux.

3. Dispositif selon l'une quelconque des revendications 1 et 2, caractérisé en ce que la cible (16) et chacune des plaques (18) comprennent des supports métalliques (30) sur matière plastique au moyen desquels la tension appropriée leur est appliquée et en ce que les écrans (24) sont métalliques.

4. Dispositif selon la revendication 3, caractérisé en ce que les écrans (24) et les supports (30) sont réalisés en aluminium.

5. Dispositif selon l'une quelconque des revendications précédentes, caractérisé en ce que le matériau constituant la cible (16) est choisi parmi les halogénures des métaux alcalins.

6. Dispositif selon l'une quelconque des revendications précédentes, caractérisé en ce que le matériau constituant les plaques amplificatrices (18) est de l'iodure de césium.

**Patentansprüche**

1. Teilchendetektor mit einem Vakuumgefäss (10), in dem ein dünnes ebenes Target (16) aus einem zur Emission von Sekundärelektronen bei Aufschlag eines Teilchens ausreichender Energie auf das Target geeigneten Material sowie eine Einrichtung zur Elektronenvervielfachung angeordnet ist, die mehrere dünne ebene Vervielfacherplatten (18) aus einem zur Emission von Sekundärelektronen bei Aufschlag von Elektronen ausreichender Energie geeigneten Material aufweist, wobei die Vervielfacherplatten (18) parallel zu dem Target ausgerichtet und mit Abstand hintereinander angeordnet sind, und wobei die von dem Target und von jeder der Vervielfacherplatten emittierten Sekundärelektronen durch eine Spannung beschleunigt werden, die in geeigneter Weise zwischen Target und der diesem nächsten Vervielfacherplatte sowie zwischen den übrigen Vervielfacherplatten angelegt ist, dadurch gekennzeichnet, dass die Materialien, aus denen Target (16) und Vervielfacherplatten (18) gebildet sind, porös sind und dass jeder Vervielfacherplatte (18) ein Schirm (24) zugeordnet und auf der gleichen Spannung wie die jeweilige Vervielfacherplatte (18) gehalten ist, um den Rückfluss von gleichzeitig mit den Sekundärelektronen emittierten positiven Ionen in Richtung auf das Target (16) zu verhindern.

2. Teilchendetektor nach Anspruch 1, dadurch gekennzeichnet, dass die Dichten des Materials, aus dem das Target (16) gebildet ist, und des Materials, aus dem die Vervielfacherplatten (18) gebildet sind, zwischen 1 und 10% der normalen Dichte dieser Materialien liegen.

3. Teilchendetektor nach einem der Ansprüche 1 und 2, dadurch gekennzeichnet, dass das Target (16) und alle Vervielfacherplatten (18) metallische Stützplatten (30) auf Kunststoff aufweisen, an die die geeignete Spannung angelegt ist, und dass die Schirme (24) metallisch sind.

4. Teilchendetektor nach Anspruch 3, dadurch gekennzeichnet, dass die Schirme (24) und die Stützplatten (30) aus Aluminium sind.

5. Teilchendetektor nach einem der vorhergehenden Ansprüche, dadurch gekennzeichnet, dass das Material für das Target (16) aus den Halogeniden der Alkalimetalle ausgewählt ist.

6. Teilchendetektor nach einem der vorhergehenden Ansprüche, dadurch gekennzeichnet, dass das Material für die Vervielfacherplatten (18) Zäsiumjodid ist.

**Claims**

1. Particle detection apparatus comprising a vacuum chamber (10) located in which are a thin flat target (16) made from a material capable of emitting secondary electrons when struck by a particle of sufficient energy, and an electron-multiplier comprising a plurality of thin flat amplifying plates (18) made from a material capable of emitting secondary electrons when struck by electrons of sufficient energy, the plates being parallel to the target and spaced apart from one another, the secondary electrons emitted by the target and by each of the plates being accelerated by an appropriate potential difference between the target and the nearest plate and between the different plates, characterized in that the target (16) and the amplifying plates (18) are made from a porous material and in that a screen (24) is associated with each of the plates (18) and has the same electric potential as its respective plate to prevent the return towards the target (16) of positive ions emitted simultaneously with the secondary electrons.

2. Apparatus according to Claim 1 characterized in that the densities of the material consistuting the target (16) and the material constituting the amplifying plates (18) are between 1 and 10% of the normal densities of these materials.

3. Apparatus according to either of Claims 1 and 2 characterized in that the target (16) and each of the plates (18) comprises a metallized plastic support (30) whereby they are brought to the appropriate electric potential, and in that the screens (24) are metallic.

4. Apparatus according to Claim 3 characterized in that the screens (24) and supports (30) are made from aluminium.

5. Apparatus according to any one of the preceding Claims characterized in that the material of the target (16) is selected from halides of alkaline metals.

6. Apparatus according to any one of the preceding Claims characterized in that the material of the amplifying plates (18) is caesium iodide.